# EUROPEAN PATENT APPLICATION

(11) **EP 1 205 501 A1**
(43) Date of publication of application: **15.05.2002**
(21) Application number: 00830739.9
(22) Date of filing: 09.11.2000
(51) Int. Cl.: C08G 18/08

(54) **Process for preparing rigid polyurethane or urethane-modified polyisocyanurate foam and foam thus obtained**

(71) Applicant: HUNTSMAN INTERNATIONAL LLC, Salt Lake City, Utah 84108 (US)
(72) Inventor: Franco, Maria Vittoria, 21100 Varese (IT); Magnani, Franco, 21100 Varese (IT); Javarone, Cristina, 21023 Besozzo (Varese) (IT)
(74) Representative: Appoloni, Romano

(57) **Abstract**

Process for preparing rigid polyurethane foams involving compression of the foam during its production.

## Description

This invention relates to processes for the preparation of rigid polyurethane or urethane-modified polyisocyanurate foams and to foams prepared thereby.

Rigid polyurethane and urethane-modified polyisocyanurate foams are in general prepared by reacting the appropriate polyisocyanate and isocyanate-reactive compound (usually a polyol) in the presence of a blowing agent. One use of such foams is as a thermal insulation medium as, for example, in the construction of refrigerated storage devices. The thermal insulating properties of rigid foams are dependent upon a number of factors including, for closed cell rigid foams, the cell size and the thermal conductivity of the contents of the cells.

A class of materials which has been widely used as blowing agent in the production of polyurethane and urethane-modified polyisocyanurate foams are the fully halogenated chlorofluorocarbons, and in particular trichlorofluoromethane (CFC-11). The exceptionally low thermal conductivity of these blowing agents, and in particular of CFC-11, has enabled the preparation of rigid foams having very effective insulation properties. Recent concern over the potential of chlorofluorocarbons to cause depletion of ozone in the atmosphere has led to an urgent need to develop reaction systems in which chlorofluorocarbon blowing agents are replaced by alternative materials which are environmentally acceptable and which also produce foams having the necessary properties for the many applications in which they are used.

Such alternative blowing agents proposed in the prior art include hydrochlorofluorocarbons, hydrofluorocarbons and especially hydrocarbons namely alkanes and cycloalkanes such as n-pentane, isopentane, cyclopentane and mixtures thereof.
However all of these alternative blowing agents have much higher thermal conductivity than CFC-11 and hence the foams produced using these blowing agents are less effective thermal insulators.

Thus one constantly looks for ways to improve the thermal insulation properties of rigid polyurethane foam made using alternative, environmentally acceptable blowing agents.

It is known in the art that thermal insulation properties of foam can be improved by compressing the foam cells.

EP 561216 describes a process for the production of foam boards which have improved thermal insulation properties by an aftertreatment comprising a temporary compression of the foam board. The foam boards which have a density of from 15 to 45 kg/m³ are compressed to a maximum extent of from 50 to 90 % of their original thickness, said compression is maintained for at least 10 seconds and subsequently released. The foam boards described in EP 561216 primarily comprise closed celled polystyrene foam.

US 5575871 describes an evacuated insulation panel having a core of thermoformed open celled rigid polyurethane foam. The open celled rigid polyurethane foam is produced by a per se known technology. The resultant foam is then thermoformed to render at least some of the cells anisotropic and then enclosed in a gas barrier material and the interior of the enclosure is sealed gas-tight under reduced pressure. The thermoforming process comprises heating the open celled foam and applying a positive pressure to the softened foam so as to produce anisotropy in cell dimension or subjecting the foam to a negative pressure in conformity with the cavity of a mold while the foam is still soft.

US 5977197 also describes an evacuated insulation panel containing a compressed open celled foam. The foam is compressed to a thickness of about 40 to about 90 % of its initial thickness. Enhanced insulating performance on a per unit thickness or volume basis is obtained compared to the foam before compression. The compression takes place after expansion of the foam is complete and the temperature of the foam has fallen below the glass transition temperature of the constituent polymer material.

WO 99/36636 also describes an evacuated insulation panel comprising an open celled foam. The compression of the foam takes places after it has been enveloped in a substantially gas impermeable flexible vessel, evacuated and sealed.

All the prior art compression methods are applied as an aftertreatment, i.e. after the foam is made.

The present invention involves a method for making rigid polyurethane or urethane-modified polyisocyanurate foams from polyisocyanates and polyfunctional isocyanate-reactive components in the presence of blowing agents, whereby the foam cells are compressed during the formation of the foam.

Compared to the prior art where compression takes place after the foam is made improved thermal insulation properties are obtained.

The compression treatment comprises applying a compressive force homogeneously to essentially the entire surface area being present in at least one direction in space or, respectively perpendicular to one axis of a body.
Preferably the compressive force is applied parallel to the axis of rising of the foam.

Compression can take place at any time during the foaming reaction. Preferably the compression takes place at a time when the foam has reached between 55 and 100 % of its maximum height, more preferably between 55 and 80 %, most preferably about 60 %.

Compression may be accomplished by any means known in the art such as between opposing parallel plates or opposing rollers.
Compression can, for example, be accomplished by reducing the volume of the mould in which the foam is produced or by decreasing the conveyor thickness in a foam lamination process.

The rigid polyurethane or urethane-modified polyisocyanurate foam produced according to the process of the present invention generally is closed-celled, i.e. the open cell content is less than 20 %.

Suitable isocyanate-reactive compounds to be used in the process of the present invention include any of those known in the art for the preparation of rigid polyurethane or urethane-modified polyisocyanurate foams. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl-terminated polythioethers, polyamides, polyesteramides, polycarbonates, polyacetals, polyolefins and polysiloxanes.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane.

The quantities of the polyisocyanate compositions and the polyfunctional isocyanate-reactive compositions to be reacted will depend upon the nature of the rigid polyurethane or urethane-modified polyisocyanurate foam to be produced and will be readily determined by those skilled in the art.

Any of the physical blowing agents known for the production of rigid polyurethane foam can be used in the process of the present invention. Examples of these include dialkyl ethers, cycloalkylene ethers and ketones, fluorinated ethers, chlorofluorocarbons, perfluorinated hydrocarbons, hydrochlorofluorocarbons, hydrofluorocarbons, and in particular hydrocarbons.
Examples of suitable hydrochlorofluorocarbons include 1-chloro-1,2-difluoroethane, 1-chloro-2,2-difluoroethane, 1-chloro-1,1-difluoroethane, 1,1-dichloro-1-fluoroethane and monochlorodifluoromethane.
Examples of suitable hydrofluorocarbons include 1,1,1,2-tetrafluoroethane, 1,1,2,2-tetrafluoroethane, trifluoromethane, heptafluoropropane, 1,1,1-trifluoroethane, 1,1,2-trifluoroethane, 1,1,1,2,2-pentafluoropropane, 1,1,1,3-tetrafluoropropane, 1,1,1,3,3-pentafluoropropane and 1,1,1,3,3-pentafluoro-n-butane.

Suitable hydrocarbon blowing agents include lower aliphatic or cyclic, linear or branched hydrocarbons such as alkanes, alkenes and cycloalkanes, preferably having from 4 to 8 carbon atoms. Specific examples include n-butane, iso-butane, 2,3-dimethylbutane, cyclobutane, n-pentane, iso-pentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene and any mixture of the above. Preferred hydrocarbons are n-butane, iso-butane, cyclopentane, n-pentane and isopentane and any mixture thereof, in particular mixtures of n-pentane and isopentane (preferred weight ratio 3:8), mixtures of cyclopentane and isobutane (preferred weight ratio 8:3), mixtures of cyclopentane and n-butane and mixtures of cyclopentane and iso- or n-pentane (preferred weight ratio between 6:4 and 8:2).

Generally water or other carbon dioxide-evolving compounds are used together with the physical blowing agents. Where water is used as chemical co-blowing agent typical amounts are in the range from 0.2 to 5 %, preferably from 0.5 to 3 % by weight based on the isocyanate-reactive compound.

The total quantity of blowing agent to be used in a reaction system for producing cellular polymeric materials will be readily determined by those skilled in the art, but will typically be from 2 to 25 % by weight based on the total reaction system.

In addition to the polyisocyanate and polyfunctional isocyanate-reactive compositions and the blowing agents, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, urethane catalysts, for example tin compounds such as stannous octoate or dibutyltin dilaurate or tertiary amines such as dimethylcyclohexylamine or triethylene diamine, isocyanurate catalysts, surfactants, fire retardants, for example halogenated alkyl phosphates such as tris chloropropyl phosphate, and fillers such as carbon black.

In operating the process for making rigid foams according to the invention, the known one-shot, prepolymer or semi-prepolymer techniques may be used together with conventional mixing methods.

It is convenient in many applications to provide the components for polyurethane production in pre-blended formulations based on each of the primary polyisocyanate and isocyanate-reactive components. In particular, many reaction systems employ a polyisocyanate-reactive composition which contains the major additives such as the blowing agent, the catalyst and the surfactant in addition to the polyisocyanate-reactive component or components.

The various aspects of this invention are illustrated, but not limited by the following examples.

### EXAMPLE 1

A closed celled rigid polyurethane foam is produced from the following ingredients:
Polyol 1: an aromatic amine-initiated polyether polyol of OH value 500 mg KOH/g
Polyol 2: a sorbitol-initiated polyether polyol of OH value 460 mg KOH/g
Polyol 3: an aromatic amine-initiated polyether polyol of OH value 310 mg KOH/g
Surfactant: a silicone surfactant package
Catalyst: an amine catalyst package
Isocyanate: a polymeric MDI

The amounts (in pbw) are indicated in Table 1 below.

**Table 1**

| | |
|---|---|
| Polyol 1 | 33 |
| Polyol 2 | 31 |
| Polyol 3 | 30 |
| Surfactant | 2.3 |
| Catalyst | 1.5 |
| Water | 2.2 |
| Cyclopentane | 12 |
| Isocyanate | 140 |

The gel time (which is the time taken for the reaction mixture to reach the transition point from fluid to crosslinked mass) of this system was 38 to 40 seconds.

In sample A the foam was not compressed.
In sample B a foam panel of dimension 30 cm x 30 cm x 3.5 cm was compressed after production of the foam (thus corresponding to the prior art aftertreatment compression methods) by putting the foam panel in a press heated at 40°C and at 200 kPa for 12 hours. After this treatment the thickness of the panel was reduced by 10 %.
In samples C to G the foam was compressed during the foaming reaction. The chemicals were injected into an open mould which was left open for a number of seconds (sample C 80 seconds; sample D 50 seconds; sample E 45 seconds; sample F 35 seconds; sample G 30 seconds) and then the mould was closed while the foam was rising. The height at the center of the foam was higher than the mould thickness.

For each of these foam samples thermal conductivity at 10°C (lambda) was measured following the standard DIN 53421.
The results are summarized in the table below.

**Table 2**

| | Lambda (mW/mK) |
|---|---|
| Sample A | 20.1 |
| Sample B | 20.2 |
| Sample C | 19.5 |
| Sample D | 19.1 |
| Sample E | 19.0 |
| Sample F | 19.0 |
| Sample G | 18.8 |

These results show that whereas the prior art compression methods (sample B) do not lead to any improvement in thermal insulation the compression method of the present invention leads to improvements in thermal insulation of up to 10 %.

## Claims

1. Process for preparing rigid polyurethane or urethane-modified polyisocyanurate foam comprising the step of reacting an organic polyisocyanate with a polyfunctional isocyanate-reactive component in the presence of at least one blowing agent **characterized in that** the foam cells are compressed during the production of the foam.

2. Process according to claim 1 wherein compression takes place at a time when the foam has reached between 55 and 100 % of its maximum height, more preferably between 55 and 80 %, most preferably about 60 %.

3. Process according to claim 1 or 2 wherein the compression is applied parallel to the axis of rising of the foam.

4. Process according to any one of the preceding claims wherein the blowing agent is a hydrocarbon.

5. Rigid polyurethane or urethane-modified polyisocyanurate foam obtainable by the process as defined in any one of claims 1 to 4.

6. Rigid polyurethane or urethane-modified polyisocyanurate foam according to claim 5 which is closed celled.
